(19) Europäisches Patentamt
European Patent Office
Office européen des brevets

(11) Veröffentlichungsnummer: **0 326 864**
**A2**

# (12) EUROPÄISCHE PATENTANMELDUNG

(21) Anmeldenummer: **89100907.8**

(51) Int. Cl.⁴: **C09D 5/24 , H01B 3/24**

(22) Anmeldetag: **20.01.89**

(30) Priorität: **29.01.88 DE 3802616**

(43) Veröffentlichungstag der Anmeldung:
**09.08.89 Patentblatt 89/32**

(84) Benannte Vertragsstaaten:
**BE DE FR GB IT**

(71) Anmelder: **BASF Aktiengesellschaft**
**Carl-Bosch-Strasse 38**
**D-6700 Ludwigshafen(DE)**

(72) Erfinder: **Naarmann, Herbert, Dr.**
**Haardtblick 15**
**D-6719 Wattenheim(DE)**
Erfinder: **Sabelus, Guenther, Dr.**
**Neustadter Strasse 25**
**D-6715 Lambsheim(DE)**

## (54) Elektrisch leitfähige Polymersysteme.

(57) Elektrisch leitfähige Polymersysteme, enthaltend als wesentliche Bestandteile

A) 5 bis 60 Gew.-Teile eines elektrisch leitfähigen Polymerisates von Verbindungen aus der Klasse der 5-gliedrigen heterocyclischen Verbindungen mit einem konjugierten $\pi$-Elektronensystem, die Stickstoff oder Schwefel als Heteroatom enthalten, der aminoaromatischen Verbindungen oder von Mischungen dieser Verbindungen und

B) 40 bis 95 Gew.-Teile eines Bindemittels für Elektrotauchlacke,

wobei sich die Gewichtsteile auf 100 Gew.-Teile der Summe aus A und B beziehen, deren Herstellung und Verwendung.

EP 0 326 864 A2

# Elektrisch leitfähige Polymersysteme

Die Erfindung betrifft elektrisch leitfähige Polymersysteme, enthaltend als wesentliche Bestandteile

A) 5 bis 60 Gew.-Teile eines elektrisch leitfähigen Polymerisates von Verbindungen aus der Klasse der 5-gliedrigen heterocyclischen Verbindungen mit einem konjugierten $\pi$-Elektronensystem, die Stickstoff oder Schwefel als Heteroatom enthalten, der aminoaromatischen Verbindungen oder von Mischungen dieser Verbindungen und

B) 40 bis 95 Gew.-Teile eines Bindemittels für Elektrotauchlacke,

wobei sich die Gewichtsteile auf 100 Gew.-Teile der Summe aus A und B beziehen.

Elektrisch leitfähige Polymerisate aus aminoaromatischen Verbindungen wie Anilin sind seit langem z.B. aus D. Labane et al. Compt. Rend. Hebd. Séanc. Acad. Scienc. Paris C 269 (1969) 964 und M. Dekker, Handbook of Conducting Polymers, Vol. 1. S. 718 (1986). Beispiele solcher Polymerisate werden auch in den deutschen Patentanmeldungen P 37 20 321.5 und P 37 22 887.0 vorgeschlagen.

Elektrisch leitfähige Polymerisate von 5-gliedrigen heterocyclischen Verbindungen sind an sich bekannt (vgl. z.B. US 3 574 072 oder DE-A-3 223 544). Nach Arbeiten von A.F. Diaz et al, J.C.S. Chem. Comm. 1979, Seite 635; J.C.S. Chem. Comm. 1979, Seite 854 und ACS Org. Coat. Plast. Chem. 43 (1980) werden bei der anodischen Polymerisation von Pyrrol in Gegenwart von Leitsalzen Filme mit elektrischen Leitfähigkeiten bis zu $10^2\ \Omega^{-1}cm^{-1}$ gebildet. Hierbei handelt es sich um p-leitende Polypyrrole, wobei als Gegenanionen vor allem $BF_4^-$, $AsF_6^-$, $ClO_4^-$ und $HSO_4^-$ genannt werden.

Polypyrrol, das elektrochemisch in Gegenwart von Carbonylverbindungen und Säuren (EP-A 166 980) oder von Alkoholen oder Ethern (DE-A 3 338 906) elektrochemisch hergestellt wird, ist bekannt. Noch nicht voll befriedigend sind die mechanischen Eigenschaften und die Wasserfestigkeit dieser Stoffe.

In der deutschen Patentanmeldung P 37 05 647.6 wird vorgeschlagen, Pyrrol in Gegenwart von Kautschuklatices anodisch zu Polypyrrol zu polymerisieren.

Aufgabe der vorliegenden Erfindung war es, elektrisch leitfähige Polymersysteme mit verbesserten Eigenschaften bereitzustellen.

Demgemäß wurden die eingangs erwähnten elektrisch leitfähigen Polymersysteme gefunden.

Außerdem wurden Verfahren zur Herstellung der Polymersysteme und ihre Anwendung als Leiter in der Elektrotechnik, als Elektrodenmaterial, Sensor oder antikorrosives Überzugsmaterial gemäß der Unteransprüche gefunden.

Unter elektrisch leitfähigen Polymerisaten im Sinne dieser Erfindung werden Polymere mit einer Leitfähigkeit von mehr als 0,1 S/cm verstanden (vgl. H.J. Mair und S. Roth, "Elektrisch leitende Kunststoffe", Carl-Hanser-Verlag 1986, S. 17-24).

Unter Polymersystemen im Sinne dieser Erfindung werden Schichtkörper aus polymeren Bestandteilen oder Polymermischungen verstanden, wobei die verschiedenen Bestandteile auch im molekularen Bereich vermischt sein können, was dem Fachmann als "Interpenetrating Network" bekannt ist. Bevorzugt werden solche Polymersysteme, die bei den unten näher erläuterten Herstellungsmethoden entstehen.

Der Bestandteil A liegt in den Polymersystemen in Mengen von 5 bis 60, bevorzugt 10 bis 40 Gew.-Teilen, bezogen auf 100 Gew.-Teile der Summe aus A und B vor.

Verbindungen aus der Klasse der 5-gliedrigen heterocyclischen Verbindungen mit einem konjugierten $\pi$-Elektronensystem, die Stickstoff oder Schwefel als Heteroatom enthalten, sind im Rahmen dieser Erfindung Verbindungen aus der Klasse der Pyrrole und der Thiophene.

Verbindungen aus der Klasse der Pyrrole sind das unsubstituierte Pyrrol selbst als auch die substituierten Pyrrole, wie die N-Alkylpyrrole, N-Arylpyrrole, die an den C-Atomen monoalkyl- oder dialkylsubstituierten Pyrrole, und die an den C-Atomen monohalogen- oder dihalogensubstituierten Pyrrole, wobei unter Alkyl $C_1$-$C_8$-Alkyl verstanden wird. Bei der Herstellung von A können die Pyrrole allein oder in Mischung miteinander eingesetzt werden, so daß die Polymerisate ein oder mehrere verschiedene Pyrrole eingebaut enthalten können. Vorzugsweise leiten sich die wiederkehrenden Pyrrol-Einheiten in den Polymeren im wesentlichen von unsubstituiertem Pyrrol selber ab. Werden substituierte Pyrrole eingesetzt, sind hierfür die 3,4-Dialkylpyrrole, insbesondere solche mit 1 bis 4 C-Atomen im Alkylrest, wie 3,4-Dimethylpyrrol und 3,4-Diethylpyrrol, wie auch die 3,4-Dihalogenpyrrole, insbesondere 3,4-Dichlorpyrrol, bevorzugt.

Verbindungen aus der Klasse der Thiophene sind das unsubstituierte Thiophen selbst, das 2-, oder 3-Methylthiophen, das 2-, 3-Ethylthiophen oder andere $C_1$-$C_8$-alkylsubstituierte Thiophene, ebenso die 2-fach mit $C_1$-$C_8$-Alkyl substituierten Thiophene, wie 2,3-Diethylthiophen oder auch die halogensubstituierten Thiophene, wie 2-Chlor- oder 3-Bromthiophen, 3,4-Dichlorthiophen. Ebenso kommen Phenylthiophene, wie 2-Phenylthiophen oder das 3-Benzylthiophen in Frage.

Unter aminoaromatischen Verbindungen werden Verbindungen mit wenigstens einem aromatischen

Ring und mindestens einer Aminogruppe verstanden. Dabei kann die Verbindung am aromatischen Ring durch Alkyl-, Alkoxy- oder Arylgruppen mit bis zu 12 C-Atomen, insbesondere Phenyl und Halogen wie Chlor oder Brom und an der Aminogruppe durch $C_1$-$C_{20}$-Alkyl oder Arylgruppen mit bis zu 12 C-Atomen substituiert sein.

Es kann sich daher um Verbindungen der allgemeinen Formel I

$H(NH)_m$-Ar-$NH_2$ I,

in der m für 0 oder 1 und Ar für eine der nachstehenden Gruppierungen steht

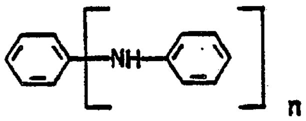 ,

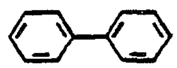 , 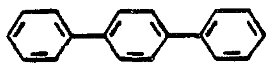 , 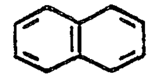 ,

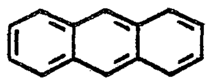 , 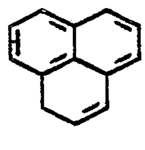 , 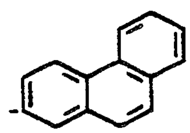 , 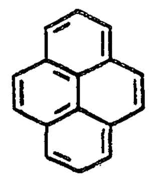 ,

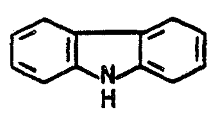 , 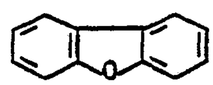 , 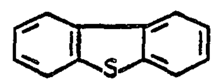 ,

wobei n einen Wert von 0 bis 50 hat und wobei die Aminogruppen an beliebiger Stelle mit der Gruppierung Ar verknüpft sein können, und wobei Benzidin (p,p′-Diaminodiphenyl) als Monomeres ausgeschlossen ist, handeln. Solche Verbindungen sind bekannt aus der deutschen Patentanmeldung P 37 20 321.5.

Bevorzugt werden Anilin, dessen am Stickstoff durch Alkyl- oder Arylgruppen mit bis zu 12 C-Atomen substituierte Derivate, p-Aminodiphenylamin, Aminodiphenylamin, Amino-p-biphenyl, Aminoanthracen, Aminophenalen, Aminophenantren, Aminopyrene, Aminocarbazol, Aminodibenzofuran und Aminodibenzothiophen. Besonders bevorzugt werden die Anilinderivate, insbesondere Anilin selbst.

Bei der Herstellung von A können auch Gemische der aminoaromatischen Verbindungen, gegebenenfalls auch Gemische mit den 5-gliedrigen heterocyclischen Verbindungen mit einem konjugierten $\pi$-Elektronensystem eingesetzt werden.

Zur Herstellung der Polymeren A werden die Monomeren, also die Pyrrole, Thiophene bzw. Aminoaromaten, im allgemeinen in einem Elektrolytlösungsmittel in Gegenwart eines Leitsalzes anodisch oxidiert und dabei polymerisiert. Bei der Herstellung der Polymeren A aus aminoaromatischen Verbindungen kann man auch mit üblichen Oxidationsmitteln wie Persulfaten wie $K_2S_2O_8$ oder $FeCl_3$ oxidieren. Die Gesamtmonomer-Konzentration beträgt hierbei üblicherweise etwa 0,1 bis 2 Mol pro Liter Lösungsmittel.

Die Elektrolytlösungsmittel können die Monomeren und die Leitsalze lösen. Die Lösungsmittel selbst können protisch oder aprotisch sein. Bevorzugte Elektrolytlösungsmittel sind z.B. Wasser oder Mischungen aus Wasser und Aceton, Acetonitril, Dimethylformamid, Dimethylsulfoxid, Methylenchlorid, N-Methylpyrrolidon oder Propylencarbonat.

Als Leitsalze dienen bevorzugt ionische oder ionisierbare Verbindungen mit Anionen starker, oxidierender Säuren oder auch von gegebenenfalls mit Nitro-Gruppen substituierten Aromaten mit sauren Gruppen. Als Kationen für diese Leitsalze kommen neben den Erdalkalimetall-Kationen und $H^+$, insbesondere die Alkalimetall-Kationen, vorzugsweise $Li^+$, $Na^+$ oder $K^+$, in Betracht. Sehr günstig sind die Onium-Kationen, vor allem des Stickstoffs und des Phosphors, etwa des Typs $R^4N^+$ und $R^4P^+$, worin R Wasserstoff und/oder niedere Alkylreste, vorzugsweise mit 1 bis 6 C-Atomen, cycloaliphatische Reste, vorzugsweise mit 6 bis 14 C-Atomen, oder aromatische Reste, vorzugsweise mit 6 bis 14 C-Atomen, bedeutet. Unter den Ammonium- und Phosphonium-Kationen sind diejenigen besonders bevorzugt, in denen R Wasserstoff und/oder einen Alkylrest mit 1 bis 4 C-Atomen darstellt. Beispielhaft für bevorzugte Onium-Kationen seien neben dem $NH_4^+$-Ion insbesondere das Tetramethylammonium-, das Tetraethylammonium-, das Tetra-n-butylammonium-, das Triphenylphosphonium- und das Tri-n-butylphosphonium-Kation genannt.

Als Anionen für das Leitsalz haben sich $BF_4^-$, $AsF_4^-$, $R\text{-}SO_3^-$, $AsF_6^-$, $SbF_6^-$, $SbCl_6^-$, $ClO_4^-$, $HSO_4^-$ und $SO_4^{2-}$, wobei R einen $C_1$-$C_{18}$-Alkylrest darstellt, als günstig erwiesen. Eine weitere Gruppe von Leitsalz-Anionen, die bei dem erfindungsgemäßen Verfahren mit besonderem Vorteil eingesetzt werden, leiten sich von Aromaten mit sauren Gruppen ab. Hierzu gehören das $C_6H_5COO^-$-Anion sowie insbesondere die Anionen von gegebenenfalls mit $C_1$-$C_{18}$-Alkylgruppen substituierten aromatischen Sulfonsäuren. Wegen der damit erzielbaren guten Ergebnisse sind Leitsalze mit dem Benzolsulfonsäure-Anion $C_6H_5SO_3^-$ oder von aromatischen Di- oder Oligosulfonsäuren ganz besonders bevorzugt. Beispielhaft sei als Leitsalz Natrium-n-dodecylsulfonat erwähnt.

Die Leitsalzkonzentration beträgt bei der Herstellung von A im allgemeinen 0,001 bis 1, vorzugsweise 0,01 bis 0,1 Mol/Liter Lösungsmittel.

Bei dem Verfahren zur Herstellung der Polymeren A wird bevorzugt in einer einfachen, üblichen elektrolytischen Zelle oder Elektrolyse-Apparatur, bestehend aus einer Zelle ohne Diaphragma, 2 Elektroden und einer externen Stromquelle, gearbeitet. Die Elektroden können dabei beispielsweise aus Metallen wie Eisen, Nickel, Titan, Aluminium, Edelstahl oder aus elektrisch leitenden Polymeren bestehen. Es können auch Edelmetallelektroden, bevorzugt Platinelektroden, verwendet werden. Dabei ist es günstig, wenn zumindest die Anode, insbesondere aber beide Elektroden, flächig ausgebildet sind, so daß sich die Polymeren in Form eines Filmes abscheiden. Außer der erwähnten einfachen elektrolytischen Zelle ohne Diaphragma können auch andere Elektrolyseeinrichtungen Einsatz finden, beispielsweise Zellen mit Diaphragma oder solche mit Referenzelektroden zur exakten Potentialbestimmung. Zur Kontrolle der Schichtstärke der abgeschiedenen Filme ist eine Messung der Strommenge (A/s) zweckmäßig.

Normalerweise führt man die elektrolytische Oxidation bei Raumtemperatur und unter Intergas durch. Da sich die Reaktionstemperatur bei der Polymerisation der Gemische als unkritisch erwiesen hat, kann die Temperatur jedoch in einem breiten Bereich variiert werden, solange die Erstarrungstemperatur bzw. Siedetemperatur des Elektrolytlösungsmittels nicht unter- bzw. überschritten wird. Im allgemeinen hat sich eine Reaktionstemperatur im Bereich von -40 bis +40 °C, vorzugsweise bei +18 bis +25 °C, als sehr vorteilhaft erwiesen.

Als Stromquelle für den Betrieb der elektrolytischen Zelle, in der die elektrochemische Herstellung von A durchgeführt wird, eignet sich jede Gleichstromquelle, wie z.B. eine Batterie, die eine hinreichend hohe elektrische Spannung liefert. Zweckmäßigerweise liegt die Spannung im Bereich von etwa 1 bis 250 Volt; als besonders vorteihaft haben sich Spannungen im Bereich von etwa 2 bis 120 Volt erwiesen. Die Stromdichte liegt üblicherweise im Bereich von 0,05 bis 100 $mA/cm^2$, vorzugsweise im Bereich von 0,1 bis 15 $mA/cm^2$.

Die während der elektrolytischen Polymerisation abgeschiedenen Polymeren werden zweckmäßigerweise zur Entfernung von anhaftendem Leitsalz mit Lösungsmitteln gewaschen und bei Temperaturen von 30 bis 150 °C, vorzugsweise unter Vakuum, getrocknet. Bei Einsatz von Graphit-, Edelmetall- oder ähnlichen Elektroden lassen sich danach die im allgemeinen filmförmig abgeschiedenen Polymere leicht von der Elektrode ablösen, vor allem wenn Schichtstärken über 40 µm abgeschieden wurden.

Der Bestandteil B liegt in den Polymersystemen in Mengen von 40 bis 95, bevorzugt 60 bis 90 Gew.-Teilen, bezogen auf 100 Gew.-Teile der Summe aus A und B, vor.

Der Begriff Elektrotauchlackierung bzw. elektrophoretische Lackierung ist beispielsweise im "Chemielexikon" von H. Römpp, 8. Aufl. 1981, Seite 1108 erläutert. Dabei werden die Lacke mit ihren Bindemitteln als positiv oder negativ geladene, im Tauchbad dispergierte Teilchen auf der Kathode oder Anode elektrophoretisch abgeschieden.

Bindemittel für Lacke, die sich anodisch oder kathodisch abscheiden lassen, sind an sich bekannt aus H.U. Schenck, H. Spoor and M. Marx, Progress in Organic Coatings 7 (1977) 1 bis 77 oder aus W. Machu, "Elektrotauchlackieurung", Verlag Chemie 1974, S. 163 bis 175. Es handelt sich im allgemeinen um Kunstharze auf Basis von Mischpolymerisaten von olefinisch ungesättigten Carbonsäuren, Umesterungsprodukten von Epoxidverbindungen mit N-Methylolamiden, ferner Alkydharze, Acrylatharze oder Polyester, z.B. mit eingebauten Sulfogruppen. Diese Harze können z.B. durch Erwärmen des abgeschiedenen Produktes auf etwa 80 bis 200, bevorzugt 120 bis 170 °C im Verlauf von 0,5 bis 5, bevorzugt 1 bis 3 Stunden, gehärtet, d.h. vernetzt werden. Nicht geeignet für die erfindungsgemäßen Polymersysteme sind natürliche oder synthetische Kautschuke.

Geeignet als Bindemittel sind solche Harze, die ihre hydrophilen Gruppen beim Härten abspalten oder durch Reaktion mit anderen Gruppierungen des gleichen Harzes oder anderer Harze chemisch so maskieren, daß ausgezeichnete Wasserfestigkeit erreicht wird. Unter diesem Gesichtspunkt sind technisch wichtig die Kondensationsprodukte aus einerseits Aldehyden, insbesondere Formaldehyd, und andererseits Melaminen, Harnstoffen, Carbonsäureamiden, Dicyandiamid, Sulfonsäureamiden, Verbindungen mit aktiven CH-Gruppen, z.B. Ketonen sowie insbesondere Diketonen, wie z.B. Benzil oder Acetylaceton. Die Herstellung der Bindemittel ist nicht Gegenstand der vorliegenden Erfindung und kann nach allgemein üblichen Methoden wie Polymerisation, Polykondensation oder Polyaddition in Lösung, Emulsion oder Suspension erfolgen.

Besonders bevorzugt als B werden Copolymerisate aus 10 bis 80 Gew.-Teilen Acrylsäure oder Methacrylsäure, 2 bis 20 Gew.-Teilen (Meth)acrylamid, 2 bis 30 Gew.-Teilen N-Methylolacrylamid, das gegebenenfalls durch $C_1$-$C_8$-Alkylalkohole verethert sein kann, 6 bis 30 Gew.-Teilen Hydroxyethylacrylat und 10 bis 80 Gew.-Teilen Styrol und/oder Acrylnitril, wobei die Gewichtsteile auf 100 Gew.-Teile des Copolymerisats bezogen sind. Die Acrylsäure oder Methacrylsäure liegt im Copolymerisat zumindest teilweise als Ammonium- bzw. Aminsalz vor. Als basische Komponente der Salze eignen sich insbesondere wasserlösliche, flüchtige, tertiäre Amine, wie Trimethylamin, N,N-Dimethyl-N-(2-hydroxyethyl)-amin. Auch Gemische von Aminen oder von Ammoniak und Aminen sind geeignet.

Die Copolymerisate sind für die erfindungsgemäße Anwendung dann am besten geeignet, wenn ihr K-Wert (nach H. Fikentscher, Cellulosechemie 13, (1932), Seiten 8 bis 64) 8 bis 35, gemessen in Dimethylformamid, beträgt.

Das Herstellen der Copolymerisate kann auf übliche Weise erfolgen, beispielsweise durch Polymerisation der Komponenten in organischen Lösungsmitteln bei erhöhter Temperatur und in Gegenwart von Polymerisationsinitiatoren, die freie Radikale liefern. Der gewünschte K-Wert der Polymeren kann durch Mitverwenden üblicher Regler leicht eingestellt werden. Sofern es erwünscht oder nötig ist, etwa vorhandene Lösungsmittel von den Polymeren ganz oder teilweise abzutrennen, kann dies in einfacher Weise durch Destillation, zweckmäßigerweise unter vermindertem Druck, oder durch Ausfällen geschehen. Die Salzbildung kann in bekannter Weise erfolgen, etwa durch einfaches Zusammenbringen der Copolymerisate mit den Basen oder durch Einsatz der entsprechenden Acrylsäuresalze oder Methacrylsäuresalze bei der Herstellung der Copolymeriste.

Die Menge der Basen soll zweckmäßigerweise in jedem Fall so gewählt werden, daß in den fertigen Copolymerisaten auf 1 Mol Carboxylgruppen 0,5 bis 2, vorzugsweise 0,8 bis 1,2, Moläquivalente der Basen entfallen.

Die Herstellung der erfindungsgemäßen Polymersysteme kann grundsätzlich in jeder Art erfolgen, die zu einem elektrisch leitfähigen System führt, z.B. durch Mischen. Bevorzugt wird es jedoch, die elektrochemische Polymerisation von A im Beisein von B durchzuführen. Es versteht sich von selbst, daß B in diesem Falle nur ein anodisch abscheidbares Bindemittel sein kann, so daß B an der gleichen Elektrode abgeschieden wird, an der A entsteht. Werden z.B. als Anodenmaterial leitfähige, faser- oder filmförmige Polymere eingesetzt, so werden, wie erwähnt, die Monomeren von A auf das polymere Elektrodenmaterial aufpolymerisiert und B darauf abgeschieden, so daß man in diesem Falle ein Polymersystem erhält, in dem das als Anode benutzte Polymere mit eingebaut ist.

Gute Erfolge werden erzielt, wenn man ein anodisch oder kathodisch abscheidbares Bindemittel B elektrophoretisch auf das elektrisch leitfähige Polymerisat A, das als Anode oder Kathode in einem Tauchbad zur elektrophoretischen Lackierung dient, abscheidet. Das Polymerisat A ist dabei vorzugsweise als filmförmiger Überzug auf einem Elektrodenträger aus Metall angebracht.

Bei Verwendung von Polymeren aus aminoaromatischen Verbindungen werden ebenfalls gute Erfolge erzielt, wenn das Polymere A gemeinsam mit dem Bindemittel B auf elektrophoretischem Wege anodisch oder kathodisch abgeschieden wird, z.B. auf einer Metallelektrode.

Die Verfahrensweise der elektrophoretischen Lackierung ist allgemein bekannt, z.B. aus W. Machu, "Elektrotauchlackierung", Verlag Chemie 1974, so daß sich weitere Erläuterungen erübrigen.

Die erfindungsgemäßen elektrisch leitfähigen Polymersysteme weisen hohe Elastizität, Bruchfestigkeit und Steifigkeit auf, die mit guter Wasserfestigkeit gepaart sind. Besonders vorteilhaft ist die Tatsache, daß die erfindungsgemäßen Polymersysteme durch thermische Behandlung gehärtet, d.h vernetzt werden können, so daß elektrisch leitfähige Polymersysteme mit sehr hoher mechanischer und chemischer Stabilität entstehen.

Die erfindungsgemäßen Polymersysteme sind vielfältig verwendbar. Bevorzugt werden sie als Leiter in der Elektrotechnik, für Schalter oder zur elektromagnetischen Abschirmung oder als Schicht- und Verbundelement eingesetzt. Gute Erfolge werden bei der Verwendung der erfindungsgemäßen Polymersysteme als Elektrodenmaterial, Sensor oder als antikorrosives Überzugsmaterial z.B. für Metalle, erzielt, insbesondere, wenn als Komponente A Polymere aus aminoaromatischen Verbindungen eingesetzt werden.

Beispiel 1

100 Gew.-Teile Wasser werden mit 1,4 Gew.-Teilen Pyrrol, 3,3 Gew.-Teilen des Natriumsalzes der N-Dodecylsulfonsäure und 5 Teilen eines Copolymerisates aus 30 Gew.% Acrylsäure, neutralisiert mit N,N-Dimethyl-N-(2-hydroxyethyl)-amin, 5 Gew.% Acrylamid, 10 Gew.% N-Methylolacrylamid, 15 Gew.% Hydroxyethylacrylat und 40 Gew.-Teilen Styrol versetzt. Die Lösung wird in eine Elektrolyseapparatur eingebracht, die zwei Platinblechelektroden enthält, die in 0,2 cm Abstand angeordnet sind. Die Elektroden sind flächig ausgebildet und haben eine Oberfläche von 20 $cm^2$. Es wird für die Dauer von 30 Minuten bei einer Stromdichte von 2 $mA/cm^2$ polymerisiert. An der Anode hat sich ein Film abgeschieden, der 45 µm dick ist. Die elektrische spezifische Leitfähigkeit beträgt 30 S/cm.

Bei 2-stündigem Härten dieses Filmes bei 150 °C entsteht ein flexibler Film, der beim dreimaligen Kochen in Wasser von jeweils 8 Stunden Dauer keine Veränderungen zeigt.

Vergleichsversuch 1*

Arbeitet man in gleicher Weise wie in Beispiel 1 beschrieben, jedoch in Abwesenheit des Copolymerisates, so erhält man einen Film von 40 µm Dicke mit einer elektrischen Leitfähigkeit von 70 S/cm, der nur mäßig bruchfest ist.

Beispiel 2

Es wird wie in Beispiel 1 gearbeitet, jedoch wird anstelle des dort verwendeten Copolymerisates ein Copolymerisat eingesetzt, das statt der neutralisierten Acrylsäure in gleicher Weise neutralsierte Methacrylsäure enthält. Es scheidet sich an der Anode ein elektrisch leitfähiger Film ab, dessen Leitfähigkeit 280 S/cm beträgt.

Nach dem Härten, wie in Beispiel 1 beschrieben, entsteht ein wasserfester Film.

Beispiel 3

Es wird wie in Beispiel 1 gearbeitet, jedoch anstelle des dort angegebenen Copolymerisates ein Polymerisat eingesetzt, das anstelle von Styrol Acrylnitril einpolymerisiert enthält. In diesem Fall wird die Elektrolyse bei einem Elektrodenabstand von 0,1 cm durchgeführt. Es scheidet sich an der Anode ein elektrisch leitfähiger Film ab, dessen Leitfähigkeit 17 S/cm beträgt.

Beispiel 4

Es wird wie in Beispiel 1 gearbeitet, jedoch wird als Anode ein Kohlenstoffaser-Gewebe eingesetzt, das kontinuierlich mit einer Geschwindigkeit von 2 cm/min durch die Elektrolytflüssigkeit geführt wird. Auf diesem Gewebe setzt sich ein Polymerfilm ab. Nach dem Härten wie in Beispiel 1 entsteht ein wasserfestes elektrisch leitfähiges Polymersystem.

Beispiel 5

100 Gew.-Teile Wasser werden mit 1,4 Gew.-Teilen Polyanilin ($M_w$ 3500), 3,3 Gew.-Teilen des Natriumsalzes der N-Dodecylsulfonsäure und 5 Teilen eines Copolymerisates aus 30 Gew.% Acrylsäure, neutralisiert mit N,N-Dimethyl-N-(2-hydroxyethyl)-amin, 5 Gew.% Acrylamid, 10 Gew.% N-Methylolacrylamid, 15 Gew.% Hydroxyethylacrylat und 40 Gew.-Teilen Styrol versetzt. Die Lösung wird in eine Elektrolyseapparatur eingebracht, die zwei Eisenblechelektroden enthält, die in 0,2 cm Abstand angeordnet sind. Die Elektroden sind flächig ausgebildet und haben eine Oberfläche von 20 $cm^2$. Es wird für die Dauer von 30 Minuten bei einer Stromdichte von 2 $mA/cm^2$ abgeschieden. An der Anode hat sich ein Film abgeschieden, der 45 µm dick ist. Die elektrische spezifische Leitfähigkeit beträgt 30 S/cm.

Bei 2-stündigem Härten dieses Filmes bei 150 °C entsteht ein flexibler Film, der beim dreimaligen Kochen in Wasser von jeweils 8 Stunden Dauer keine Veränderungen zeigt. Auch nach einwöchiger Lagerung in 0,1 N HCl bei Raumtemperatur zeigten die beschichteten Zonen keine Korrosion.

Vergleichsversuch 5*

Arbeitet man in gleicher Weise wie in Beispiel 5 beschrieben, jedoch in Abwesenheit des Copolymerisates, so erhält man einen Film von 40 µm Dicke mit einer elektrischen Leitfähigkeit von $0{,}1 \cdot 10^{-5}$ S/cm, der nur mäßig bruchfest ist und die Korrosion der beschichteten Zonen nicht verhindert.

Beispiel 6

Es wird wie in Beispiel 5 gearbeitet, jedoch wird anstelle des dort verwendeten Copolymerisates ein Copolymerisat eingesetzt, das statt der neutralisierten Acrylsäure in gleicher Weise neutralsierte Methacrylsäure enthält. Es scheidet sich an der Anode ein elektrisch leitfähiger Film ab, dessen Leitfähigkeit 0,5 S/cm beträgt.

Nach dem Härten, wie in Beispiel 5 beschrieben, entsteht ein wasserfester, korrosionsstabiler Film.

Beispiel 7

Es wird wie in Beispiel 5 gearbeitet, jedoch anstelle des dort angegebenen Copolymerisates ein Polymerisat eingesetzt, das anstelle von Styrol Acrylnitril einpolymerisiert enthält. In diesem Fall wird die Elektrolyse bei einem Elektrodenabstand von 0,1 cm durchgeführt. Es scheidet sich an der Anode ein elektrisch leitfähiger Film ab, dessen Leitfähigkeit 0,5 S/cm beträgt.

Beispiel 8

Es wird wie in Beispiel 5 gearbeitet, jedoch wird als Anode ein Kohlenstoffaser-Gewebe eingesetzt, das kontinuierlich mit einer Geschwindigkeit von 2 cm/min durch die Elektrolytflüssigkeit geführt wird. Auf diesem Gewebe setzt sich ein Polymerfilm ab. Nach dem Härten wie in Beispiel 5 entsteht ein wasserfestes elektrisch leitfähiges Polymersystem, das als Gewebe in prepregs für Verbundwerkstoffe oder zur elektromagnetischen Abschirmung verwendet werden kann.

**Ansprüche**

1. Elektrisch leitfähige Polymersysteme, enthaltend als wesentliche Bestandteile
A) 5 bis 60 Gew.-Teile eines elektrisch leitfähigen Polymerisates von Verbindungen aus der Klasse der 5-gliedrigen heterocyclischen Verbindungen mit einem konjugierten $\pi$-Elektronensystem, die Stickstoff oder Schwefel als Heteroatom enthalten, der aminoaromatischen Verbindungen oder von Mischungen dieser Verbindungen und
B) 40 bis 95 Gew.-Teile eines Bindemittels für Elektrotauchlacke,
wobei sich die Gewichtsteile auf 100 Gew.-Teile der Summe aus A und B beziehen.

2. Polymersysteme nach Anspruch 1, in denen A ein elektrisch leitfähiges Polymerisat von Verbindungen aus der Klasse der 5-gliedrigen heterocyclischen Verbindungen mit einem konjugierten $\pi$-Elektronensystem, die Stickstoff oder Schwefel als Heteroatom enthalten, ist.

3. Polymersysteme nach Anspruch 1, in denen A ein elektrisch leitfähiges Polymerisat aus der Klasse der aminoaromatischen Verbindungen ist.

4. Verfahren zur Herstellung von elektrisch leitfähigen Polymersystemen gemäß den Ansprüchen 1 bis 3, dadurch gekennzeichnet, daß man die elektrochemische Polymerisation von A in Gegenwart von B vornimmt.

5. Verfahren zur Herstellung von elektrisch leitfähigen Polymersystemen gemäß den Ansprüchen 1 bis 3, dadurch gekennzeichnet, daß man B an einer Anode oder Kathode aus A elektrophoretisch abscheidet.

6. Verfahren zur Herstellung von elektrisch leitfähigen Polymersystemen gemäß den Ansprüchen 1 bis 3, dadurch gekennzeichnet, daß man A gemeinsam mit B elektrophoretisch abscheidet.

7. Verwendung von elektrisch leitfähigen Polymersystemen gemäß einem der Ansprüche 1 bis 6 als Leiter in der Elektrotechnik.

8. Verwendung von elektrisch leitfähigen Polymersystemen gemäß einem der Ansprüche 1 bis 6 als Elektrodenmaterial, Sensor oder als anti-korrosives Überzugsmaterial.